Europäisches Patentamt

European Patent Office

Office européen des brevets

(11) Publication number: **0 062 488**
A2

# EUROPEAN PATENT APPLICATION

(21) Application number: 82301681.1

(22) Date of filing: 30.03.82

(51) Int. Cl.³: **B 29 B 1/04**, C 08 J 3/20

(30) Priority: 31.03.81 US 249650

(71) Applicant: UNION CARBIDE CORPORATION, Old Ridgebury Road, Danbury Connecticut 06817 (US)

(72) Inventor: Nadin, Robert Paul, 209 East View Wharton, New Jersey, 07885 (US)
Inventor: Bostwick, Robert, 39F Franklin Greens, Somerset New Jersey, 08873 (US)
Inventor: Handwerk, Richard, 7 Banor Drive, South Somerville New Jersey, 08876 (US)
Inventor: Nicholakopoulos, Antonios, 621 Paxson Avenue, Mercerville New Jersey, 08619 (US)
Inventor: Gill, Grace Margaret, 186 Capricorn Drive, South Somerville New Jersey, 08096 (US)

(43) Date of publication of application: 13.10.82
Bulletin 82/41

(74) Representative: Baverstock, Michael George Douglas et al, BOULT, WADE & TENNANT 27 Furnival Street, London, EC4A 1PQ (GB)

(84) Designated Contracting States: BE DE FR GB IT SE

(54) Particulate resins with functional additives.

(57) This invention provides a continuous process for incorporating functional additives into particulate resins using a finisher, said additives being incorporated in large amounts with essentially no free additive remaining after such incorporation.

EP 0 062 488 A2

PARTICULATE RESINS WITH FUNCTIONAL ADDITIVES

The invention relates generally to resin particles with additives incorporated therein, and, more particularly, to a continuous process for incorporating additives into resin particles, together with a composition produced thereby, which employs a finishing machine (i.e., a continuous intensive mixer).

Incorporating functional additives into particulate resins using intensive mixing techniques is known in the art. By way of illustration, U.S.-A- 4,025,480 discloses a continuous process for incorporating powdered additives with a solid polymer fluff by first putting the additives and fluff through a disk mill and then through a polisher. As another example, U.S.-A- 4,039,507 discloses a batch process for incorporating a finely divided functional solid into olefin polymers which comprises blending these ingredients in a Henschel mixer, said functional solid being present in an amount of from about 10 to about 120 weight parts per 100 parts of polymer.

From a commercial volume and economic standpoint, it is well-known that continuous processes are generally preferred to batch processes. Heretofore, the continuous processes employing polishers for the incorporation of functional additives into particulate resin have incorporated up to about 2 weight percent of functional additive, based on the total weight of additive plus resin, without encountering free additive in the final product. Accordingly, it would be desirable to discover a continuous process for such incorporation that employs a finisher, without
the necessity of a diskmill, and which provides for
incorporation of from 2.1 to 16 weight percent of functional additive, based on the total weight
of additive plus resin, with essentially no free
additive remaining after such incorporation.

It is an object of the present invention to provide a continuous process for incorporating functional additives into polymer particles using a finisher, wherein from 2.1 weight percent to 16 weight percent of functional additive is incorporated, based on the total weight of additive plus resin, with essentially no free additive remaining after such incorporation.

It is another object of the invention to provide a composition of matter consisting essentially of particulate resin and at least one additive, said additive or additives being present in a total amount of from 2.1 to 16 weight percent, based on the total weight of resin and additives in the composition, said additives being localized in the surface layer of said polymer.

These and other objects will become apparent upon a reading of the following detailed specification.

In accordance with the present invention, a continuous process is provided for incorporating functional additives into particulate resin using a finisher, wherein from 2.1 weight percent to 16 weight percent of functional additive is incorporated, based on the total weight of additive plus resin, with essentially no free additive remaining after such incorporation. The process comprises continuously feeding

-4-

particulate resins and at least one functional additive into a finisher and mechanically working said resin and additive in said finisher to provide finished resins having the additive incorporated into the surface of said resin, thereafter discharging said finished resin from said finisher, the improvement comprising said additive or additives being present in a total amount of from 2.1 to 16 weight percent, based on the total weight of resin and additives in the composition, essentially no free additive remaining in said finisher after the incorporation.

Also encompassed by the present invention is a composition of matter consisting essentially of particulate resin and at least one additive, said additive or additives being present in total amount of from 2.1 to 16 weight percent based on the total weight of polymer and additives in the composition, said additives being localized in the surface layer of said polymer.

The term "resin" as used herein denotes thermoplastic or thermosetting polymers. The preferred polymers within the scope of the invention are aliphatic or aromatic monoolefins in which the backbone chain of the polymer macromolecule is substantially a non-crosslinked hydrocarbon chain with aliphatic or aromatic substituents. Exemplary olefin polymers include polymers of ethylene, propylene, butene-1 and higher 1-alkenes having from 5 to 10 carbon atoms as well as polymers of styrene, ar(t-butyl)styrene, alphamethystyrene, ar-chlorostyrene, ar-bromostyrene, armethylstyrene and other monovinylidene aromatic monomers. It is understood that the term "resin" includes homopolymers, copolymers and interpolymers of the foregoing aliphatic and aromatic olefins as well as mixtures and blends of such homopolymers and copolymers.

Particularly preferred polyethylene polymers are low and medium density polymers such as those prepared in accordance with U.S.-A- 4,011,382.

As indicated above, the resin useful in the process of this invention is in particulate form (e.g., granules, powder or pulverized particles. The particle size of the resin is not overly critical and can vary over a wide range. The particulate resin useful in the process of this invention preferably has a particle diameter of from 44 microns to 4,000 microns, and more preferably the particle size is from 70 microns to 2,500 microns in diameter.

In the process of this invention, when polyethylene is the resin selected, the resin particles enter the finisher at between ambient temperature and 200°F (preferably between 75°F and 180°F), and emerge from the finisher at an elevated temperature below the melt temperature of the resin. When using other resins such as, for example, polypropylene or polybutylene, the entering temperature range for particles going into the finisher would be adjusted up or down depending upon the melting point of the particular resin used, as would be known to those skilled in the art.

The rise in temperature of the resin during the finishing operation is due to the heat generated by mechanical friction caused by contact between and among resin particles, additives mixing arms and scraper, and finisher walls. A temperature rise may also be effected by externally applied heat if desired for any purpose, such as to soften the resin particles.

Since most resinous polymers do not have sharp melting points, but instead melt over a wide range of perhaps 5°F to 15°F (3°C-8°C), it is impractical to specify the maximum finishing temperature for all the polymers that can be employed in the present invention. The determination of this temperature should be made for each polymer employed.

Typical finishers useful in the process of the present invention are described in U.S. -A- 3,472,491 and 3,229,002.

The process of the present invention is suitably effected in a continuous fashion, although a semi-continuous method could be used if desired. The present process is preferably carried out at atmospheric pressure, although a higher or lower pressure could be used if desired.

The process of the present invention is preferably effected in the absence of any disc-type mill pre-treatment as required by U.S.-A- 4,025,480. Such a mill (as disclosed in U.S.-A- 3,584,799) has the tendancy to add some heat history to the polymer and also adds dollar and time costs to the polymer processing. Use of the present invention permits avoidance of any disc mill apparatus.

The resin employed in the present invention can be added separately to the finisher or together with the functional additive or additives, in either a single or multiple streams. The functional additive employed in the invention would include liquids, solid and semi-solids, such as, for example, pigments, dyes, fillers, stabilizers, lubricants, antistatic agents, fire retardants,or combinations thereof. Illustrately, such materials comprise comparatively large particle size solids, for example, stabilizers such as ultraviolet stabilizers as 2-hydroxy-4-n-octoxybenzophenone having particle sizes in the range of from 75 to 600 micrometers. Such materials also comprise somewhat smaller size solids, including, for

example, pigments such as titanium dioxide, carbon black, ultramarine blue, cadmium orange, zinc oxide, iron oxide and similar materials, of particle size in the range from 5 micrometers down to particles having an average diameter less than 1 micrometer, e.g. about 0.2 micrometer. Other suitable solids include magnesium carbonate, calcium carbonate, silicon dioxide, asbestos china clay, lignite, anthracite coal, bituminous coal, silicates, wood dust, cork dust, cellulose and a wide variety of color agents. In addition, other fillers, fire retardants, stabilizers, etc., which are suitable include finely divided functional solids conventionally incorporated into resins.

A preferred functional additive within the scope of the present is carbon black. Carbon black is an additive having a particularly high surface area and it is notably "dirty" when in free form. It is highly preferred that no free carbon black remain after incorporation of the carbon black into the finished resin is made. Due to carbon black's unique nature, it is preferably employed in an amount of no greater than about 12 weight percent based on the total weight of resin and additives in the composition. When employed in an amount greater than about 5 weight percent the residence time of resin plus additives in the finisher should be adjusted to provide a residence time for resin plus additives of at least about 2 minutes.

Another useful additive is nonpolymeric silica, preferably of high purity with uniform micron size particles. The size of the silica particles preferably varies from one micron up to 40 microns, commercially available as SUPERFLOSS, a product of Johns-Manville Corporation.

The present invention provides a method whereby up to 16 weight percent of additives can be incorporated into the polymer, with essentially no free additives remaining after such incorporation.

The functional additive is generally employed in the process of the invention in an amount of from 2.1 weight percent to 16 weight percent (preferably from 2.1 to 14 weight percent) of functional additive, based on the total weight of additive plus polymer. The resulting finished resin is a composition wherein the additive or additives are localized in the surface layer of the resin particles. This localization of additive is distinctly different from some batch type compositions, such as those produced in accordance with U.S.-A- 3,997,494 wherein the functional additive is distributed throughout the resin and is not localized on the surface. It is surprising, therefore, that quantities of additive of up to 16 weight percent can be employed in accordance with the present invention without encountering free additive in the final product, in view of the fact that all of the additive is "crowded" into and onto the surface of the resin, and not distributed throughout the resin, without the necessity of a bonding agent to bond the additives to the polymer.

The following examples are intended to illustrate, but in no way limit, the present invention.

-10-

## EXAMPLE 1

Into a commercial finishing machine (Wedco #14/21) having the following design characteristics:

4 mixing arm sets (2 arms per set)

0.75 inch diameter arm

14 inch diameter by 21 inch length mixing chamber

2 scraper sets (2 scrapers per set)

and operated at 1000 rpm shaft speed. was continuously fed granular polyethylene resin particles having an average particle size of 0.050 inches (resin melt index = 2; resin density = 0.92) together with fine-powdered titanium dioxide to provide 13 weight percent $TiO_2$ based on the total weight of resin plus $TiO_2$. The inlet temperature of the resin into the finisher was ambient temperature (about 65°F) whereas the outlet temperature was about 210°F.

Good quality incorporations of $TiO_2$ onto the surface layer of the resin particles was achieved in the product from the finisher, with no free $TiO_2$ being observed in the product.

## EXAMPLE 2

A Wedco #14/21 finisher was operated using the same operating conditions and parameters as given in Example 1 above, except that the $TiO_2$ additive was replaced with silica in the form of SUPERFLOSS. The SUPERFLOSS was employed in an amount of 13.3 weight percent, based on the total weight of polyethylene resin plus SUPERFLOSS.

Ash weight analysis at the outlet from the finisher as compared to 70 feet of conveyor length. downstream at the exit from a cyclone separator confirmed that the product had a consistent silica weight of 13.3 weight percent based on the product weight. This consistency of product after passing through the separator confirmed the fact that there was essentially no free silica in the product.

## EXAMPLE 3

In order to visually compare granular polyethylene resin finished with carbon black made using the finishing machine and operating conditions and parameters of Example 1, except that the TiO$_2$ was replaced with carbon black,resin and carbon black were first finished using the method of the present invention. Next, separate comparisons were made with techniques of the prior art including tumble-blending in accordance with U.S. Patent 4,039,507; batch finishing in a Henchel mixer in accordance with U.S. Patent 4,039,507; and, hot compounding of resin plus carbon black. In the hot-compounding technique, the resin plus carbon black was vigorously mixed in a Farrel  Continuous Mixer and then discharged into a pelletizing extruder to be pelletized. In each case, the carbon black was employed at a level of 2.6 weight percent based on the total weight of resin plus carbon black.

The results appear in Table I which follows:

TABLE I - carbon black (2.6 wt. %)

| | Comparison A Tumble blend | Comparison B Henchel batch | Comparison C Hot Compounding | Example 3 |
|---|---|---|---|---|
| Type Process | batch | batch | continuous | continuous |
| Energy req'd. (kw-hr/lb resin) | trace | 0.045 | ~.1 5 | 0.034 |
| Product Appearance | salt and pepper | particles black with white core | black throughout particles | particles black with white core |
| Extruded tape Product Quality | | | | |
| Extruded tape Appearance | poor | not run | good | good |
| microscopic dispersion of carbon black on extruded tape | poor | not run | good | good |
| UV absorption coefficient (ASTM-D3449) | not run | not run | >4000 | 4800 |

## EXAMPLE 4

Using an identical procedure and apparatus as Example 3 above, an attempt was made to determine higher operating limits for carbon black additive in polyethylene resin.

Using the finisher of Example 1, at an ambient inlet and 200°F outlet temperature and about a one minute residence time, coating of the resin using 16 weight percent carbon black based on total resin plus carbon black provided a poor product with substantial free carbon black remaining in the product.

When finisher-jacket cooling was employed using cold water to provide a residence time for resin plus carbon black of about 2.5 minutes at an ambient inlet and 205°F outlet temperature, successful incorporation of 6 and 8 weight percent amounts of carbon black was made, providing a fine-particle coated resin product. Comparable results were achieved at up to 10 weight percent carbon black using a Henshel batch mixer at 223°F.

CLAIMS:

1.    A process for finishing a particulate resin by continuously feeding the resin and at least one functional additive into a finisher and mechanically working the resin in the finisher, characterised in that the additive or additives are present in a total amount of from 2.1 to 16 weight percent, based on the total weight of resin and additive(s) in the composition, and in that essentially no free additive(s) remains after incorporation.

2.    A process as claimed in claim 1 wherein the resin is polyethylene.

3.    A process as claimed in claim 1 wherein the resin is polypropylene.

4.    A process as claimed in any one of the preceding claims wherein the additive is carbon black.

5.    A composition consisting essentially of a particulate resin and at least one additive, characterised in that the additive or additives are present in a total amount of from 2.1 to 16 weight percent, based on the total weight of polymer and additive(s) in the composition, and in that the additive(s) are localized in the surface layer of the polymer.

6.   A composition as claimed in claim 5 wherein the resin is polyethylene.

7.   A composition as claimed in claim 5 wherein the resin is polypropylene

8.   A composition as claimed in any one of claims 5 to 7 wherein the additive is carbon black.

MGB/SJW/DR/EA587